(19) **Europäisches Patentamt**

**European Patent Office**

**Office européen des brevets**

(11) **EP 1 092 847 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(51) Int Cl.⁷: $F01N\ 9/00$, $F01N\ 3/023$

(21) Anmeldenummer: **00121905.4**

(22) Anmeldetag: **07.10.2000**

(54) **Verfahren zur Ermittlung des Beladungswertes eines Partikelfilters in Verbrennungskraftmaschinen, insbesondere Dieselmotoren**

Method of determining the degree of loading of a particulate filter of internal combustion engines, in particular of Diesel engines

Méthode de détermination du degré de charge d'un filtre à particules pour moteurs à combustion interne, notamment pour moteurs Diesel

(84) Benannte Vertragsstaaten:
**AT BE CH CY DE DK ES FI FR GB GR IE IT LI LU MC NL PT SE**

(30) Priorität: **14.10.1999 DE 19949502**

(43) Veröffentlichungstag der Anmeldung:
**18.04.2001 Patentblatt 2001/16**

(73) Patentinhaber: **Volkswagen Aktiengesellschaft 38436 Wolfsburg (DE)**

(72) Erfinder: **Lang, Thomas 38440 Wolfsburg (DE)**

(74) Vertreter: **Reinstädler, Diane, Dr. Anwaltskanzlei Gulde Hengelhaupt Ziebig & Schneider Wallstrasse 58/59 10179 Berlin (DE)**

(56) Entgegenhaltungen:
EP-A- 0 411 445          DE-A- 4 230 180
US-A- 4 567 725          US-A- 4 986 069

**Beschreibung**

Die Erfindung betrifft ein Verfahren zur Ermittlung des Beladungswertes eines Partikelfilters in Verbrennungskraftmaschinen, insbesondere in Dieselmotoren.

Partikelfilter werden zur Entfernung von Partikeln aus Abgasen von Brennkraftmaschinen eingesetzt, insbesondere für die Entfernung von Rußbestandteilen aus Abgasen von Dieselmotoren. Außer der Reduktion von Schadstoffen in der Abluft haben Partikelfilter vor allem auch die Aufgabe, den stromabwärts geschalteten $No_X$-Speicherkatalysator vor Verunreinigungen zu schützen, die diesen zerstören würden.

Für die Aufrechterhaltung ihrer Funktionsfähigkeit müssen Partikelfilter in kurzen Abständen einem Regenerierungsprozeß unterzogen werden. In der Praxis hat sich die thermische Regeneration durchgesetzt, bei der zum Beispiel ein mittels einer separaten Heizvorrichtung hochaufgeheizter Heizstrom mit dem von der Brennkraftmaschine kommenden Abgas vermischt und durch den Filter geleitet wird oder aber auch die Einspritzung direkt beeinflußt wird. Hierbei kommt es zur Entzündung und Verbrennung der dem Filter anhaftenden Partikel. In Abhängigkeit von der Durch-führung der Regeneration während des Stillstandes oder des Betriebs des Motors werden als Varianten der thermischen Regeneration die Standregeneration, die Wechselregeneration und die Vollstromregeneration unterschieden.

DE 198 380 32 beschreibt eine Variante der thermischen Regeneration, in der die erforderliche Ausheiztemperatur am Filter erzeugt wird, indem der Durchflußquerschnitt stromabwärts des Partikelfilters temporär verringert und somit der Abgasgegendruck erhöht wird.

Grundsätzliches Problem aller bekannten Regenerationsverfahren ist die Ermittlung des tatsächlichen Beladungszustandes des Partikelfilters und somit des Notwendigwerdens der Regeneration. In einfachen Verfahren wird üblicherweise ein Kilometerwert oder eine Betriebsdauer der Verbrennungskraftmaschine für die Durchführung der Regeneration des Filters in festen Intervallen zugrunde gelegt. Dabei wird der Regenerationstakt derart ausgelegt, daß auch unter extremen Betriebsbedingungen, bei denen es zu vermehrtem Rußausstoß kommt, die Funktionsfähigkeit des Filters gewährleistet wird. Folglich wird die Regeneration häufiger als gemäß dem Beladungswert des Filters tatsächlich notwendig durchgeführt. Selbst feiner abgestufte Regenerationsintervalle, die auf die vorherrschenden Betriebsbedingungen der Brennkraftmaschine eingerichtet sind, stellen in der Praxis eine zu grobe Näherung an den tatsächlichen Regenerationsbedarf dar.

Wünschenswert ist eine kontinuierliche Überwachung des Beladungsgrades des Partikelfilters, so daß der Regenerationsprozeß exakt auf den tatsächlichen Bedarf abgestimmt werden kann.

In DE 198 380 32 A1 und DE 42 30 180 A1 werden Verfahren zur Ermittlung des Beladungszustandes von Partikelfiltern offenbart, wobei jeweils aus aktuellen motorspezifischen und filterspezifischen Betriebsparametem ein Kennwert errechnet wird, der ein Maß für die Filterbeladung darstellt. Beide Verfahren legen als motorspezifische Größe die Motordrehzahl zugrunde. Nachteilig an den genannten Verfahren ist, daß die Drehzahl nur eine unzureichende Näherung an den die Brennkraftmaschine durchströmenden Abgasstrom darstellt. Folglich ergibt sich auch in diesen verbesserten Verfahren eine unzureichende Genauigkeit für die Bestimmung des Beladungsgrades des Partikelfilters und des Zeitpunktes der Regeneration.

Der vorliegenden Erfindung liegt die Aufgabe zugrunde, ein Verfahren zur Ermittlung des Beladungszustandes eines Partikelfilters mit den im Oberbegriff des Hauptanspruchs genannten Merkmalen vorzuschlagen, das die Nachteile der bekannten Verfahren überkommt.

Die Aufgabe wird durch die Merkmale des Anspruchs 1 gelöst. Dadurch, daß der die Verbrennungskraftmaschine durchströmende Abgasmassenstrom $\dot{m}$ ermittelt wird, eine oder mehrere für den den Filter durchströmenden Abgasstrom kennzeichnende, thermodynamische Größen erfaßt werden, aus den Eingangsgrößen des Abgasmassenstroms $\dot{m}$ und den den Filter durchströmenden Abgasstrom kennzeichnenden Größen ein Beladungswert $p^*$ berechnet wird, läßt sich der Beladungswert $p^*$ besonders exakt bestimmen.

In einer bevorzugten Ausgestaltung der Erfindung wird der Abgasmassenstrom $\dot{m}$ über die Größe eines der Brennkraftmaschine zugeführten Ansaugvolumenstromes $\dot{V}_L$ ermittelt. Alternativ hierzu kann der Abgasmassenstrom $\dot{m}$ auch mittels eines theoretischen Modells berechnet wird, in welches das der Brennkraftmaschine zugeführte Ansaugvolumen $\dot{V}_L$ und das in die Brennkraftmaschine eingespeiste Kraftstoffvolumen $\dot{V}_K$ eingehen. Beide Methoden verringern zusätzlich den möglichen Fehler bei der Ermittlung des Beladungswertes $p^*$.

Weiterhin ist vorteilhaft, wenn die den Filter durchströmenden Abgasstrom kennzeichnenden Größen einen Druckabfall $\Delta p$ über dem Filter und eine Abgastemperatur $T$ im Filter umfassen. Über die Beziehung

$$p^* = \frac{\Delta p}{p_0} \cdot \frac{T_0}{T} \cdot \frac{\dot{m}_0}{\dot{m}}$$

kann in einfacher Weise der dimensionslose Beladungs-wert $p^*$ ermittelt werden, wobei die Parameter $p_0$, $T_0$ und $\dot{m}_0$ Normierungsgrößen für den Druck, die Temperatur und den Abgasmassenstrom darstellen. Bei sehr hohen Temperaturen muß zusätzlich ein Korrekturwert in die Gleichung aufgenommen werden, da unter diesen Bedingungen die Linearität des Temperatureinflusses verloren geht.

Ferner hat es sich als vorteilhaft erwiesen, einen Differenzbetrag $\Delta p^*$ des ermittelten Beladungswertes $p^*$ von einem dem unbeladenen Filter entsprechenden Kennwert $p^*_0$ zu ermitteln und bei Überschreitung eines vorgegebenen Differenzgrenzbetrages $\Delta p^*_G$ einen Regenerierungsvorgang einzuleiten.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung, die eine Anordnung eines Partikelfilters 10 in einem Abgasstrang 12 eines Dieselmotors 14 (Brennkraftmaschine) von Kraftfahrzeugen zeigt, näher erläutert.

Abgasseitig können dem Abgasstrang 12 mehrere Sensoren zugeordnet werden, wie beispielsweise Temperatursensoren 16, 18 oder Drucksensoren 20, 22. Die auf diese Weise ermittelten Größen finden Eingang in einem Motorsteuergerät 24. Über das Motorsteuergerät 24 kann in bekannter Weise beispielsweise ein Einspritzsystem 26, eine Drosselklappe 28 in einem Saugrohr 30 oder auch eine Drosselklappe 32 in einem Abgaskanal 12 gesteuert werden. Weiterhin werden in dem Motorsteuergerät 24 spezifische Betriebsparameter des Dieselmotors 14 eingelesen. Alle im folgenden genannten Eingangsgrößen für die Berechnung eines Beladungswertes $p^*$ können über die beispielhaft aufgezählten Sensoren sowie über bekannte Verfahren ermittelt und in dem Motorsteuergerät 24 zur Verfügung gestellt werden.

Bei dem erfindungsgemäßen Verfahren wird der die Verbrennungskraftmaschine durchströmende Abgasmassenstrom $\dot{m}$ als motorspezifischer Betriebsparameter mit einer der weiter unten beschriebenen Methoden ermittelt. Als filterspezifischer Betriebsparameter wird mindestens eine Größe gemessen, die den den Filter 10 durchströmenden Abgasstrom kennzeichnet. Aus den motor- und filterspezifischen Eingangsgrößen des Abgasmassenstroms $\dot{m}$ einerseits und der den Partikelfilter 10 und den den Filter 10 durchströmenden Abgasstrom kennzeichnenden Größen andrerseits wird gemäß einem empirischen Zusammenhang ein dimensionsloser Beladungswert $p^*$ berechnet, der ein Maß für den Beladungszustand des Filters 10 darstellt. Die Rechnereinheit bestimmt ferner den Differenzbetrag $\Delta p^*$ aus der Differenz des ermittelten Beladungswertes $p^*$ und einem dem unbeladenen Filter 10 entsprechenden Kennwert $p^*_0$. Schließlich erfolgt ein Vergleich des berechneten Differenzbetrages $\Delta p^*$ mit einem vorgegebenen Differenzgrenzbetrag $\Delta p^*_G$. Bei Erreichen oder Überschreitung des vorgegebenen Differenzgrenzbetrages $\Delta^*_G$, d.h. wenn der Betrag von $\Delta p^*$ größer als der Betrag von $\Delta p^*_G$ ist, wird einer der an sich bekannten Regenerierungsvorgänge automatisch ausgelöst. Optional kann auch ein Anzeigeninstrument den Fahrer über den aktuellen Beladungszustand des Filters 10 informieren.

Als Eingangsgröße für den nicht direkt meßbaren Abgasmassenstrom $\dot{m}$ wird erfindungsgemäß der der Brennkraftmaschine 14 zugeführte Ansaugvolumenstrom $\dot{V}_L$ ermittelt, der beispielsweise mittels eines im Ansaugrohr 30 der Brennkraftmaschine 16 angeordneten Abgasmassenmessers (HFM) erfaßt wird. Aus dem Ansaugvolumenstrom $\dot{V}_L$ kann der direkt proportionale Abgasmassenstrom $\dot{m}$ ermittelt werden.

In einer bevorzugten Ausführungsform der Erfindung wird zusätzlich zum Ansaugvolumenstrom $\dot{V}_L$ der in die Brennkraftmaschine 16 eingespeiste Kraftstoffvolumenstrom $\dot{V}_K$ gemessen. Der Abgasmassenstrom $\dot{m}$ wird dann mittels eines theoretischen Modells, in welches der Ansaugvolumenstrom $\dot{V}_L$ und der Kraftstoffvolumenstrom $\dot{V}_K$ eingehen, berechnet. Gegenüber der obigen Ausführungsform, in welcher der Abgasmassenstrom $\dot{m}$ allein auf Basis des Ansaugvolumenstroms $\dot{V}_L$ ermittelt wird, resultiert aus der zusätzlichen Berücksichtigung des zugeführten Kraftstoffvolumens $\dot{V}_K$ eine größere Genauigkeit des berechneten Abgasmassenstroms $\dot{m}$.

Der den Partikelfilter 10 durchströmende Abgasstrom wird erfaßt, indem mindestens eine thermodynamische Größe des Abgasstroms gemessen wird. Dies kann der Filtervordruck, die Druckdifferenz vor und nach dem Filter 10 (Druckabfall über dem Filter 10) oder die Temperatur des Abgasstromes sein. In einer bevorzugten Ausführungsform werden zwei Größen, nämlich der Druckabfall $\Delta p$ über dem Filter 10 und die Abgastemperatur $T$ im Filter 10, gemessen. Die Messung des Druckabfalls erfolgt mit einer an sich bekannten Methode, bei der eine Differenzdruckmeßeinheit den Druck vor und nach dem Partikelfilter 10 mißt. Die Temperatur wird mittels des Temperaturfühlers 18 erfaßt, der bevorzugt im Filter 10 angeordnet ist.

In Abhängigkeit der ermittelten filterspezifischen Betriebsparameter wird gemäß einem empirischen Zusammenhang der dimensionslose Beladungswert p* aus den filterspezifischen und motorspezifischen Betriebsparametem berechnet. Im Falle der bevorzugten Messung des Druckabfalls $\Delta p$ und der Abgastemperatur $T$ wird der Beladungswert $p^*$ aus der folgenden Gleichung berechnet:

$$p^* = \frac{\Delta p}{p_0} \cdot \frac{T_0}{T} \cdot \frac{\dot{m}_0}{\dot{m}},$$

wobei die Parameter $p_0$, $T_0$ und $\dot{m}_0$ Standardgrößen zur Normierung des Drucks, der Temperatur und des Abgasmassenstroms darstellen. Bevorzugte Werte sind etwa $P_0$ =1 mbar (Filtervordruck bei Leerlauf und unbeladenem Filter), $\dot{m}$ = 26 kg/h (Abgasmassenstrom bei Leerlauf) und T = 20°C. Bei sehr hohen Temperaturen muß aufgrund der dort auftretenden Nichtlinearität des Temperatureinflusses ein empirisch ermittelbarer Korrekturwert in die Gleichung aufgenommen werden. Um das Gewicht der Temperatur unter den geschilderten Bedingungen stärker zu berücksichtigen, kann beispielsweise der Temperatureinfluß experimentell bei der Beladungswertermittlung nach folgender Gleichung eingebunden werden, wobei x, y die empirisch zu ermittelnden Korrekturwerte sind:

$$p^* = \frac{\Delta p}{p_0} \frac{\dot{m}_0}{\dot{m}} \cdot \frac{T_0}{xe^{-T/y}}$$

Es hat sich ferner als vorteilhaft erwiesen, alle erfaßten Betriebsparameter über vorbestimmte Zeitintervalle zu messen und ihre arithmetischen Mittel in die Berechnung des Beladungswertes $p^*$ einfließen zu lassen.

Alle Berechnungsschritte des erfindungsgemäßen Verfahrens, wie die Berechnung des Abgasmassenstroms und des Beladungswertes, des Differenzbetrages und Abgleich mit dem Differenzgrenzbetrag, können vorteilhafterweise von einer gemeinsamen Rechnereinheit durchgeführt werden. Diese Rechnereinheit wird üblicherweise in das Motorsteuergerät 26 integriert.

Das Verhältnis von dem die Verbrennungskraftmaschine 14 durchströmenden Abgasmassenstrom zu dem den Partikelfilter 10 durchfließenden Abgasmassenstrom stellt eine gut beschreibende thermodynamische Größe für den Strömungswiderstand des Filters 10 und somit für seinen Beladungsgrad dar. Es wird aus obiger Offenbarung daher offensichtlich, daß das Verfahren zur Ermittlung des Beladungszustandes eines Partikelfilters 10 unter Einbeziehung des Abgasmassenstroms eine sehr viel höhere Genauigkeit aufweist als bekannte Verfahren. Die vorliegende Erfindung überkommt auf diese Weise die Nachteile des Technikstandes und ist in der Lage, den Regenerationsprozeß des Partikelfilters 10 sehr exakt auf den Beladungszustand des Filters 10 abzustimmen.

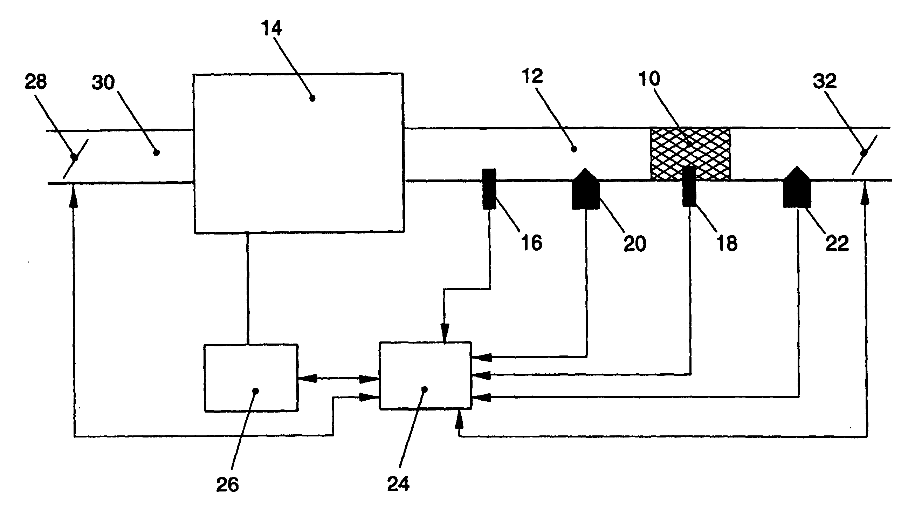

**Patentansprüche**

1. Verfahren zur Ermittlung des Beladungswertes ($p^*$) eines in einer Verbrennungskraftmaschine (14), insbesondere in einem Dieselmotor, verwendeten Partikelfilters (10), **dadurch gekennzeichnet, dass** ein die Verbrennungskraftmaschine (14) durchströmender Abgasmassenstrom ($\dot{m}$) ermittelt wird, mindestens eine, für einen den Partikelfilter (10) durchströmenden Abgasstrom kennzeichnende thermodynamische Größen erfasst wird, aus den Eingangsgrößen des Abgasmassenstroms ($\dot{m}$) und der mindestens einen, den den Filter (10) durchströmenden Abgasstrom kennzeichnenden Größe ein Beladungswert ($p^*$) berechnet wird.

2. Verfahren nach Anspruch 1, **dadurch gekennzeichnet, dass** der Abgasmassenstrom ($\dot{m}$) über die Größe eines der Verbrennungskraftmaschine (14) zugeführten Ansaugvolumenstromes ($\dot{V}_L$) ermittelt wird.

3. Verfahren nach Anspruch 1 oder 2, **dadurch gekennzeichnet, dass** der Abgasmassenstrom ($\dot{m}$) mittels eines theoretischen Modells berechnet wird, in welches das der Verbrennungskraftmaschine (14) zugeführte Ansaugvolumen ($\dot{V}_L$) und das in die Brennkraftmaschine eingespeiste Kraftstoffvolumen ($\dot{V}_K$) eingehen.

4. Verfahren nach einem der Ansprüche 1 bis 3, **dadurch gekennzeichnet, dass** die mindestens eine, den Filter (10) durchströmenden Abgasstrom kennzeichnende Größe ein Druckabfall ($\Delta p$) über dem Filter und/oder eine Abgastemperatur ($T$) im Filter (10) sind.

5. Verfahren nach einem der vorhergehenden Ansprüche, **dadurch gekennzeichnet, dass** die Eingangsgrößen zur Berechnung eines dimensionslosen Beladungswertes ($p^*$) durch Normierungsgrößen normiert werden.

6. Verfahren nach Anspruch 5, **dadurch gekennzeichnet, dass** der dimensionslose Beladungswert ($p^*$) gemäß der Beziehung

$$p^* = \frac{\Delta p}{p_0} \cdot \frac{T_0}{T} \cdot \frac{\dot{m}_0}{\dot{m}}$$

berechnet wird, wobei die Parameter ($p_0$), ($T_0$) und ($\dot{m}_0$) Normierungsgrößen für den Druck, die Temperatur und den Abgasmassenstrom darstellen.

7. Verfahren nach Anspruch 5, **dadurch gekennzeichnet, dass** der Beladungswert ($p^*$) gemäß der Beziehung

$$p^* = \frac{\Delta p}{p_0} \cdot \frac{\dot{m}_0}{\dot{m}} \cdot \frac{T_0}{xe^{-T/y}}$$

berechnet wird, wobei die Parameter (x, y) empirisch zu ermittelnde Korrekturwerte sind.

8. Verfahren nach einem der vorhergehenden Ansprüche, **dadurch gekennzeichnet, dass** ein Differenzbetrag ($\Delta p^*$) des ermittelten Beladungswertes ($p^*$) von einem dem unbeladenen Filter entsprechenden Kennwert ($p^*_0$) ermittelt wird und bei Überschreitung eines vorgegebenen Differenzgrenzbetrages ($\Delta p^*_G$) ein Regenerierungsvorgang ausgelöst wird.

**Claims**

1. Method for determining the loading value ($p^*$) of a particle filter (10) used in a combustion engine (14), especially in a diesel engine, **characterised in that** an exhaust-gas mass flow ($\dot{m}$) flowing through the combustion engine (14) is registered; that at least one thermodynamic value characterising the exhaust-gas flow passing through the particle filter (10) is registered; and that a loading value ($p^*$) is calculated from the input values of the exhaust-gas mass flow ($\dot{m}$) and the at least one value characterising the exhaust-gas flow passing through the filter (10).

2. Method according to claim 1, **characterised in that** the exhaust-gas mass flow ($\dot{m}$) is determined via the value of an intake volume ($\dot{V}_L$) supplied to the combustion engine (14).

3. Method according to claim 1 or 2, **characterised in that** the exhaust-gas mass flow ($\dot{m}$) is calculated by means of a theoretical model, which includes the intake volume ($\dot{V}_L$) supplied to the combustion engine (14) and the volume of fuel ($\dot{V}_K$) supplied to the combustion engine.

4. Method according to any one of claims 1 to 3, **characterised in that** the at least one value characterising the exhaust-gas flow passing through the filter (10) is a decline in pressure ($\Delta p$) across the filter and/or an exhaust-gas temperature (T) in the filter (10).

5. Method according to any one of the preceding claims, **characterised in that** the input values for calculating a dimensionless loading value ($p^*$) are scaled via scaling values.

6. Method according to claim 5, **characterised in that** the dimensionless loading value ($p^*$) is calculated according to the formula:

$$p^* = \frac{\Delta p}{p_0} \cdot \frac{T_0}{T} \cdot \frac{\dot{m}_0}{\dot{m}}$$

wherein the parameters ($p_0$), ($T_0$) and ($\dot{m}_0$) represent scaling values for the pressure, the temperature and the exhaust-gas mass flow.

7. Method according to claim 5, **characterised in that** the loading value ($p^*$) is calculated according to the formula:

$$p^* = \frac{\Delta p}{p_0} \cdot \frac{\dot{m}_0}{\dot{m}} \cdot \frac{T_0}{xe^{-T/y}}$$

wherein the parameters (x,y) are empirically determined correction values.

8. Method according to any one of the preceding claims, **characterised in that** a difference value ($\Delta p^*$) of the determined loading value ($p^*$) from a parameter ($p^*_0$) corresponding to the un-loaded filter is determined, and that a regeneration procedure is triggered, when a predetermined difference threshold value ($\Delta p^*_G$) is exceeded.

**Revendications**

1. Procédé de détermination de la valeur de charge ($p^*$) d'un filtre à particules (10) utilisé dans un moteur à combustion interne (14), notamment dans un moteur diesel, **caractérisé en ce qu'**on détermine le flux massique de gaz d'échappement ($\dot{m}$) traversant le moteur à combustion interne (14), **en ce qu'**on détecte au moins une grandeur thermodynamique caractérisant le flux de gaz d'échappement traversant le filtre à particules (10) et **en ce qu'**on calcule une valeur de charge ($p^*$) à partir des grandeurs d'entrée du flux massique de gaz d'échappement (m) et de la au moins une grandeur thermodynamique caractérisant le flux de gaz d'échappement traversant le filtre (10).

2. Procédé selon la revendication 1, **caractérisé en ce qu'**on détermine le flux massique de gaz d'échappement ($\dot{m}$) par l'intermédiaire de la grandeur d'un flux volumique aspiré ($\dot{V}_L$) envoyé au moteur à combustion interne (14).

3. Procédé selon la revendication 1 ou 2, **caractérisé en ce qu'**on calcule le flux massique de gaz d'échappement ($\dot{m}$) au moyen d'un modèle théorique dans lequel entrent le volume aspiré ($\dot{V}_L$) envoyé au moteur à combustion interne (14) et le volume de carburant ($\dot{V}_K$) introduit dans le moteur à combustion interne.

4. Procédé selon l'une des revendications 1 à 3, **caractérisé en ce que** la au moins une grandeur caractérisant le flux de gaz d'échappement traversant le filtre (10) est une chute de pression ($\Delta p$) à travers le filtre et/ou une température de gaz d'échappement (T) dans le filtre (10).

5. Procédé selon l'une des revendications précédentes, **caractérisé en ce qu'**on normalise les grandeurs d'entrée pour le calcul d'une valeur de charge sans dimension ($p^*$) au moyen de grandeurs de normalisation.

6. Procédé selon la revendication 5, **caractérisé en ce qu'**on calcule la valeur de charge sans dimension (p*) selon la relation :

$$p^* = \frac{\Delta p}{p_0} \cdot \frac{T_0}{T} \cdot \frac{\dot{m}_0}{\dot{m}}$$

les paramètres $(p_0)$, $(T_0)$ et $(\dot{m}_0)$ représentant des grandeurs de calcul de normalisation pour la pression, la température et le flux massique du gaz d'échappement.

7. Procédé selon la revendication 5, **caractérisé en ce qu'**on calcule la valeur de charge sans dimension (p*) selon la relation :

$$p^* = \frac{\Delta p}{p_0} \cdot \frac{\dot{m}_0}{\dot{m}} \cdot \frac{T_0}{xe^{-T/y}}$$

les paramètres (x, y) étant des valeurs de correction à déterminer de façon empirique.

8. Procédé selon l'une des revendications précédentes, **caractérisé en ce qu'**on détermine une différence $(\Delta p^*)$ de la valeur de charge déterminée (p*) à partir d'une valeur caractéristique $(p^*_0)$ correspondant au filtre non chargé et en ce que, lors du dépassement d'une différence limite $(\Delta p^*_G)$ prédéterminée, on déclenche un processus de régénération.

EP 1 092 847 B1